# EUROPEAN PATENT APPLICATION

(11) **EP 2 392 633 A1**
(43) Date of publication of application: **07.12.2011**
(21) Application number: 11164585.9
(22) Date of filing: 03.05.2011
(51) Int. Cl.: C10G 2/00, C10J 3/52

(54) **Method for recycling FT-wax-containing iron catalyst removed from a Fischer-Tropsch reactor**

(30) Priority: 21.05.2010 FI 20105563
(71) Applicant: VAPO OY, 40100 Jyväskylä (FI)
(72) Inventor: Timonen, Mika, 40420, Jyväskylä (FI)
(74) Representative: Vastavuo, Juhani Veli

(57) **Abstract**

A method is disclosed for utilizing a waste product flow discharged from a Fisher-Tropsch reactor, the waste product chiefly consisting of spent catalyst and FT wax. The method is characterized in that waste flow, specifically containing iron catalyst and FT wax, discharged from the FT reactor is passed back to the gasification unit of the BtL process.

## Description

The invention relates to a method in accordance with the preamble of claim 1 for utilizing a waste product flow discharged from a Fischer-Tropsch reactor, the waste product chiefly consisting of spent catalyst and FT wax. The invention also relates to a use in accordance with claim 7.

In the art of biomass gasification are known low-temperature and high-temperature techniques that respectively operate either below or above the melting point of ash.

Low-temperature gasifiers typically operate at a temperature of 1000 °C maximum and are implemented as either fixed-bed reactors (power rating less than 20 MW) or as fluidized-bed reactors (power rating above 20 MW). Fuel is fed into these reactors generally as a mass of solid, comminuted particles. High-temperature gasifiers are operated above the melting point of the fuel's ash component, typically at a temperature of about 1400 °C, and carry out processes often requiring fuel comminuted to a fine particle size for firing a burner that serves as the gasifier unit. This kind of embodiment is characterized by allowing the burner to be relatively easily fired also with liquid and gaseous raw materials whose combustion in low-temperature gasifiers is complicated.

In the art is also well known the Fischer-Tropsch method, abbreviated as the FT method, which is based on a catalyzed chemical reaction wherein synthesis gas containing only carbon monoxide and hydrogen is converted into various paraffinic hydrocarbons that at room temperature generally are waxy compounds. Typically, iron and cobalt catalysts are used. The principal target of the method is to produce synthetic oil compounds for use as synthetic fuel or lubricant.

Fischer-Tropsch reactors have two basic constructions: multitubular fixed-bed reactors and slurry-phase reactors. In tubular reactors the catalyst is placed in long tubes whereby the syngas flows along them simultaneously reacting with the catalyst. Changing and activating the catalyst in this kind of reactor requires a substantially long shutdown period and, generally, having a reactor system with duplicated reactors. In the other construction, the reactor is filled with an extremely fine catalyst powder and the syngas is passed through this slurry mass wherein it reacts with the catalyst to form hydrocarbon chains. The catalyst herein generally comprises an aluminum substrate whereon the active component, i.e., iron or cobalt catalyst is deposited. This arrangement permits easy replenishment with fresh catalyst as compared with the shutdown-type replacement of tubes in a tubular reactor, since the fresh catalyst can be simply fed into the reactor. The latter method is characterized in that the finished wax-like end product must be separated apart from the catalyst. Moreover, the spent, exhausted catalyst must continuously be removed from the process along with the introduction of fresh catalyst. Herein, the term exhausted catalyst refers to spent catalyst whose activity is exhausted.

In addition to the factors discussed above, the activity and longevity of catalysts may vary greatly. Cobalt catalyst is expensive but very slowly exhausting and capable of retaining its activity, thus needing only extremely small amounts thereof to be added. In contrast, iron catalyst is more cost-effective but less active. Hence, it must be continuously removed from the reactor during separation of wax. Resultingly, the outcome of the process is a hydrocarbon-based product that at room temperature is wax-like and contains 10 ― 50 %, typically about 20 %, of the catalyst material in the form of extremely fine dust fraction of iron. On the other hand, this waste product flow advantageously contains wax-like hydrocarbon chain compounds of high heating value.

A particular problem in the use of iron catalyst arises from the substantial amounts of exhausted iron catalyst generated in the process. The spent catalyst also carries away about 2 % of the energy content of the end product discharged from the FT reactor. This impairs conversion of biomass into FT wax and further into liquid fuels. Moreover, the waste fraction needs storage, transport and handling in a dedicated plant, and this kind of treatment is not generally available. If the wax cools down, it changes into a product similar to candle stearin. Hence, due to the wax-like character of the product, it must over the entire transport chain be kept at a temperature above 120 °C. In practice, this requires at least a special train for transport or, more probably, shipping over sea. The last resort to get rid of this waste product is to take it, e.g., to a dumping site of special waste or destroy it in a hazardous-waste incineration plant.

It must be further noted that this iron-containing biowax lowers the ash melt temperature when combined with a biofuel. Hence, it is incompatible with combustion or gasification equipment operating close to the ash melt temperature. In spite of its high energy content, the biowax is an energy source extremely difficult to utilize due to said handicap of changing the behavior of the iron catalyst ash.

Now the present invention offers a method capable of overcoming all the above-discussed problems. An essential feature of the method according to the invention is to utilize the spent iron catalyst and simultaneously to improve the efficiency of the entire process. These essential features of the invention are crucial in the implementation of the method and use thereof. More specifically, the invention is characterized by what is stated in the appended claims.

Exhausted catalyst from an FT reactor is removed in a separation stage under specifications issued by the equipment manufacturer, whereby the fraction contains 10 ― 50 %, typically about 20 %, of spent catalyst material and, respectively, 50 ―90 %, typically about 80 %, of FT wax, i.e., hydrocarbon chains forming a solid product at room temperature. When leaving the reactor, the flow of catalyst waste is at a temperature of about 200 °C and hence in liquid form. The wax is kept in fluid form, i.e., hot and taken to the gasifier unit of the BtL process that in the present system is a high-temperature/entrained-flow gasifier or a pressurized oxygen gasification process further developed thereof. An essential feature of the process is that the operating temperature is elevated above the ash melt temperature.

According to the invention, infeed of liquid biowax is integrated with the burner unit of a high-temperature gasifier, whereby the fraction of iron catalyst and biowax can be gasified at a high temperature into raw syngas. The iron catalyst melts along with other ash components in the way characteristic of this gasifier type. The ash melt is cooled at the bottom of the gasifier with water, whereby a nonsoluble vitrified ash phase is formed. This vitrified ash may simply be taken to a conventional dumping site or, more probably, be utilized in land/road construction projects.

Tests performed have shown that iron catalyst does not significantly change the ash melt temperature in high-temperature gasification of biomass. Moreover, according other information on the art, the iron catalyst will act similarly to other biomass ash so as to protect the gasifier inner walls in the form of a downward-flowing molten phase. An essential feature of the invention is that the present arrangement for recirculating spent catalyst back to the gasifier improves the overall efficiency of the entire process in the generation of end products by about 2 %.

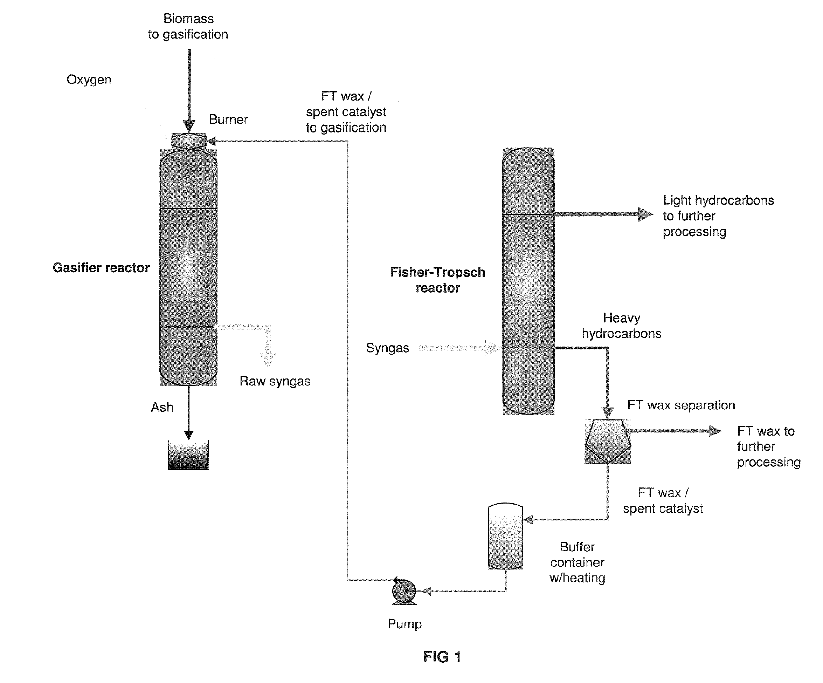

In the following, the invention is described in more detail with the help of a preferred embodiment by making reference to appended Fig. 1, in which drawing:
Fig. 1 shows a process diagram of an embodiment implementing the method.

In Fig. 1 is shown a generalized diagram of a process suited for implementing the method according to the invention. As known in the art, the production of raw syngas requires plural process stages before it is ready to be used as syngas in an FT reactor. For greater clarity in the description of the invention, the intermediate stages are omitted from the process diagram.

When the process is used as shown in Fig. 1 illustrating the present method, a specific feature of the invention is that when the method is applied to slurry-type FT reactor using iron-containing catalyst, the flow of spent catalyst and FT wax considered a waste flow is passed out from the FT reactor to a buffer vessel, where its temperature is maintained high enough to keep it in fluid form. In principle, heating can be accomplished using similar techniques as those applied to handling heavy fuel oil.

The fluid waste flow is pumped directly to the burner of the high-temperature gasifier of the BtL process. Into the burner is constructed a feed lance for introducing this kind of fluid biofuel component. In the gasifier burner, the hydrocarbon components of the waste flow are gasified in a pressurized gasification reactor in the presence of oxygen. In the process, hydrocarbons are gasified completely thereby forming the raw material for the FT process, that is, a mixture of carbon monoxide and hydrogen generally known as raw syngas. In addition to these, the process also produces carbon dioxide that is separated from the gas flow with the help of equipment located downstream in the system.

Finally, iron catalyst melts in the high-temperature gasification process along with the ash resulting from the combustion of the other biomass being gasified. The molten ash flows as a fluid mass along the inner walls of the gasifier reactor as is necessary and characteristic in gasification techniques. The molten fraction of iron catalyst is cooled with water at the bottom of the gasifier reactor and is removed from the reactor along with other ash components in the form of a vitrified mass. This mass can be further utilized as road construction material, for instance.

In the light of the above description, it is obvious that the invention provides significant benefits, whereby the salient feature of the invention is the use of spent iron catalyst that contains FT wax and is removed from an FT reactor in the gasification stage of a BtL process.

To a person skilled in the art it is obvious that the invention is not limited by the above-described exemplary embodiments, but rather may be varied within the inventive spirit and scope of the appended claims.

## Claims

1. A method for utilizing a waste product flow discharged from a Fisher-Tropsch reactor, the waste product chiefly consisting of spent catalyst and FT wax, **characterized in that** in the method the waste flow, specifically containing iron catalyst and FT wax, discharged from the FT reactor is passed back to the gasification unit of the BtL process.

2. The method of claim 1, **characterized in that** in the method the waste flow discharged from the FT reactor containing iron catalyst and FT wax is pumped directly back to the high-temperature gasifier burner of the BtL process, whereby the recirculation of spent catalyst according to the method back to the gasifier improves the overall efficiency of the entire process in the generation of end products by about 2 %.

3. The method of claim 1 or 2, **characterized in that** in the method the waste flow is maintained in fluid form, whereby the waste flow fraction contains 10 ― 50 %, typically about 20 %, of spent catalyst material and, respectively, 50 ― 90 %, typically about 80 %, of FT wax and that the waste flow is pumped to the gasifier burner having a feed lance constructed therein for feeding the fluid biowaste component into the process.

4. The method of any of claims 1 - 3, **characterized in that** in the method the flow of iron-containing catalyst with FT wax is pumped to the gasification unit which is a high-temperature/entrained-flow gasifier or a pressurized oxygen gasification process further developed thereof, whereby according to the method the process temperature is elevated above the ash melt temperature.

5. The method of any of claims 1 - 4, **characterized in that** in the method from the slurry-type FT reactor using iron-containing catalyst, the flow of spent catalyst and FT wax is passed as a hot waste flow to a buffer vessel, wherein its temperature is maintained high enough, preferably higher than 120 °C, in order to keep the mass of the flow in fluid form.

6. The method of any of claims 1 - 5, **characterized in that** in the method at the gasifier burner the hydrocarbon components of the waste flow are gasified in the pressurized gasification reactor in the presence of oxygen, whereby carbon monoxide and hydrogen are formed and the iron catalyst melts in the high-temperature gasification process along with the ash resulting from the combustion of the other biomass being gasified in such a fashion that the molten ash flows as a fluid mass along the inner walls of the gasifier reactor and the molten fraction of iron catalyst is cooled with water at the bottom of the gasifier reactor and is removed from the reactor along with other ash components in the form of a vitrified mass.

7. Use of FT wax, particularly such that contains iron catalyst, discharged from an FT reactor in the gasification stage of a BtL process.

8. The use according to claim 7 of biomass dust, such that the waste flow of iron catalyst and FT wax discharged from the FT reactor is directed to the high-temperature gasifier burner of the BtL process, whereby the recirculation of spent catalyst according to the method back to the gasifier improves the overall efficiency of the entire process in the generation of end products by about 2 %.

9. The use according to claims 7 and 8 such that the waste flow is maintained in fluid form, whereby the waste flow fraction contains 10 - 50 %, typically about 20 %, of spent catalyst material and, respectively, 50 ―90 %, typically about 80 %, of FT wax and that the waste flow is pumped to the gasifier burner having a feed lance constructed therein for feeding the fluid biowaste component into the process.

10. The use according to any of claims 7 - 9 such that the flow of iron catalyst with FT wax is pumped to the gasification unit which is a high-temperature/entrained-flow gasifier or a pressurized oxygen gasification process further developed thereof, whereby the process is **characterized in that** the process temperature is elevated above the ash melt temperature.

11. The use according to any of claims 7 - 10 such that from the slurry-type FT reactor using iron-containing catalyst, the flow of spent catalyst and FT wax is passed as a hot waste flow to a buffer vessel, wherein its temperature is maintained high enough to keep the mass of the flow in fluid form.
